Europäisches Patentamt

(19) European Patent Office

Office européen des brevets

(11) Publication number: **0 454 493 A2**

(12) **EUROPEAN PATENT APPLICATION**

(21) Application number: 91303816.2

(22) Date of filing: 26.04.91

(51) Int. Cl.⁵: **B01L 3/14, B65D 51/00, B29C 45/00**

(30) Priority: 26.04.90 CA 2015571

(43) Date of publication of application:
30.10.91 Bulletin 91/44

(84) Designated Contracting States:
AT BE CH DE FR GB IT LI LU NL

(71) Applicant: Macartney, Charles Terrence
83 Hollywood Crescent
Toronto, Ontario M4L 2K4 (CA)
Applicant: Daykin, Victor Alexander
729 Pebble Court
Pickering, Ontario L1V 3Z5 (CA)

(72) Inventor: Macartney, Charles Terrence
83 Hollywood Crescent
Toronto, Ontario M4L 2K4 (CA)
Inventor: Daykin, Victor Alexander
729 Pebble Court
Pickering, Ontario L1V 3Z5 (CA)

(74) Representative: Votier, Sidney David et al
CARPMAELS & RANSFORD 43, Bloomsbury
Square
London WC1A 2RA (GB)

(54) Reinsertable closure for sample tubes.

(57) A reinsertable sealing closure for sealing the open ends of vessels, such as sample collection tubes, for example, vacuum blood collection vials, comprises a two component molded stopper, having a sealing portion of sealing grade thermoplastic elastomer (TPE), for sealing the mouth of the container, and a second portion thermally bonded thereto, providing a seal support structure connecting with an exterior skirt. The closure is injection molded by way of a two-shot process, enabling the selective use of a reduced quantity of sealing grade TPE for the sealing component, secured in bonded relation with lower cost polyolefin interior and exterior support elements. The closure provides long term sealing integrity, while permitting access to the tube contents by way of a hollow needle or cannula inserted axially through a needle acceptance zone of the closure. A drop-containment reservoir surrounding the needle acceptance zone, on the crow of the closure, can receive and contain any stray drops of the tube contents, which may occur upon withdrawal of the needle from the closure, which provision is highly desireable in the case of blood samples, which may be AIDS contaminated. The closure may be incinerated without the generation of toxic products.

EP 0 454 493 A2

FIG.1

## FIELD OF THE INVENTION

This invention is directed to a removable closure, and in particular to a re-usable sealing closure suitable for use with biological sample collection tubes; and to a method of manufacture of the closure.

## BACKGROUND OF THE INVENTION

In the handling of biological samples, particularly blood samples that may contain infectious matter such as the highly contagious AIDS virus, it is necessary to provide reinsertable closures for the sample tubes, having high sealing integrity, while providing an access for sample taking purposes by way of a hollow needle or cannula, to the contents of the tube.

While such closures are re-usable, in the sense that they can be removed and reinserted in the respective sample tube, they require to be of low cost, as they are generally destroyed, along with the sample tube and its contents, by way of incineration, upon the completion of testing. For that reason, the closure is preferably of non-toxic material, enabling the safe combustion thereof, without the generation of toxic by-products.

In the case of prior art closures, the factor of high costs has precluded the provision of closures possessing the desired physical characteristics to the required degree.

In addition to the foregoing characteristics, such closures also are required to maintain effective, long duration, dependable sealing, even at differential pressures.

## SUMMARY OF THE INVENTION

The present invention provides a removable sealing closure for use in the open mouth of a tube, such as a biological sample tube, in sealing relation therewith.

The closure, in a preferred embodiment has an outer, axially extending skirt portion connecting at one end in load transfer relation with an interior portion of the closure.

The interior portion has an axially depressed end surface, and an aperture extending axially therethrough; and is spaced radially inwardly of the skirt portion to define an annular recess therebetween.

The interior portion has a coating of a sealing grade thermoplastic elastomer covering its surfaces and filling the axial aperture thereof, to form a closure plug having a needle acceptance zone therein, for passage of a hollow needle or cannula therethrough. The closure plug is spaced radially inwardly of the skirt inner surface, forming an annular recess to receive the mouth and adjoining neck portion of a sample tube in inserted relation therein.

The sealing grade elastomer (TPE) is of sufficient softness to provide a tight seal with the inner surface of the tube mouth, and to permit the insertion through the needle acceptance zone of a hollow needle or cannula, to access the contents of the tube.

The closure is provided with a peripheral surface portion of a first, sealing grade thermoplastic elastomer (TPE) to make sealing contact with a peripheral surface portion of the tube.

An inset structural portion of the stopper, forming a part of the plug part, within the sealing grade first thermoplastic elastomer, is of a second thermoplastic elastomer having a greater stiffness than the first TPE.

In the preferred embodiment the first sealing grade TPE portion of the closure plug portion is fused at an interface thereof with the inset portion of a second TPE. The inset plug portion of the closure is of annular form, having an axially extending central aperture therein having the first, sealing grade TPE extending at least partially therethrough. The central aperture constitutes a clearance passage such that the needle need only penetrate the first, sealing grade elastomer in order to access the tube. The inset portion of the closure plug connects in load transfer relation with the outer annular skirt portion, located in spaced relation from the plug peripheral surface portion.

The thus formed annular recess, located between the skirt and the plug portions of the closure, includes a relieved (or enlarged) blind end, in use to accommodate air compressed therein by the axial insertion of the tube end. This facilitates insertion and removal of the closure, and tends to preclude outward creeping of the closure from off the tube, over prolonged periods of use.

It has been found that adoption of a sealing grade first thermoplastic elastomer having a hardness in the range of Shore A 50-70 durometer facilitates the effectiveness of the seal, while permitting through penetration of the hollow needle or cannula, to access the tube contents.

In the preferred embodiment a hardness for the sealing grade elastomer in the range Shore 55-60 durometer has proved successful. One such sealing grade thermoplastic elastomer consists of MONSANTO TPE 3281-60 (TM), the stiffer skirt and attached inset portions being of olefinic thermoplastic, such as suitably stiff forms of polypropylene or polyethylene, to provide requisite support to the sealing grade elastomer to achieve the desired longevity of seal integrity.

The presence of the support olefin portion of the closure plug in thermally bonded relation with the soft, sealing grade TPE material enables the development of sealing pressures against the container wall surface sufficient to ensure maintenance of seal effectiveness over protracted periods, estimated to extend for a long as two years. Pressure within the tube, as maintained by the closure, may be above or below atmospheric pressure, ranging from 20 ins Hg Vacuum to 1.5 atmospheres of positive pressure.

The central, axially extending aperture through the support olefin portion of the plug is preferably dimensioned diametrically to receive automated insertion of a cannula therein, being provided with a steeply tapered, axially outer entry portion therefor.

External edges of the subject closure are radiused, to minimize any danger to protective latex gloves or the skin of technicians or others handling the closure. This is considered to be a matter of some significance in view of the extreme health threat posed by the potential presence of the highly contagious HIV or AIDS virus.

The present invention further provides a method of making a removable sealing closure as disclosed herein, comprising the steps of injection molding within a mold a support portion of the closure, in a selected thermoplastic possessing a selected first range of properties; cooling the support portion to an extent sufficient to substantially maintain the form thereof; changing the mold to provide space therein adjacent at least one selected surface area of the support portion; injection molding within the mold with a sealing grade thermoplasticelastomer in covering, fused relation with the selected surface of the support portion; and cooling and removing the closure from the mold.

The form of the closure, and its method of manufacture lend themselves to production in conventional thermoplastic injection molding machines, to thereby achieve consequent cost savings, even as high as 50% over existing closures.

## BRIEF DESCRIPTION OF THE DRAWINGS

Certain embodiments of the invention are described by way of illustration, without limitation of the invention thereto, reference being made to the accompanying drawings, wherein;

Figure 1 is a diammetrical sectional view, in elevation, of a closure in accordance with the invention, together with a portion of a sample tube inserted therein;

Figure 2 is a plan view of the Figure 1 embodiment; and

Figure 3 is a schematic block diagram of the process for closure manufacture.

Figures 4 and 5 are diammetrical views similar to Figure 1 of further embodiments of the subject closure.

## DETAILED DESCRIPTION OF THE INVENTION

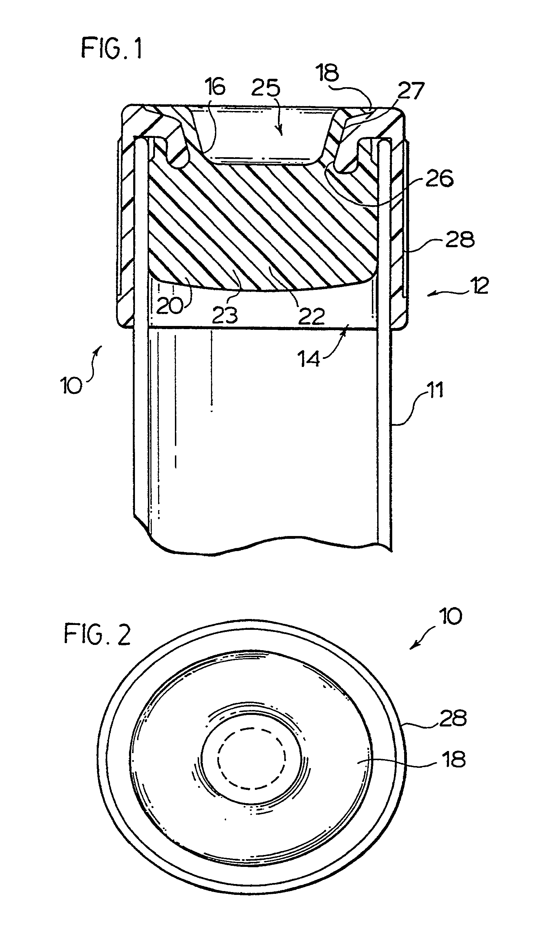

Referring to Figures 1 and 2, a closure 10 having a sample tube 11 inserted therein, has a cylindrical skirt portion 12 and an interior plug portion 14. The plug portion 14 has an inset portion 16 connected in unitary relation with the skirt portion 12; and outer layers 18, 20 of sealing grade TPE connected in unitary relation by axial portion 22 extending through an axially extending central bore 23, within inset portion 16.

An end depression 25 in layer 18 and in the underlying axial end surface of inset portion 16 constitutes a droplet storage reservoir, the central aperture 26 thereof constituting a needle acceptance zone, for insertion and penetration of a hollow needle therethrough. The diameter of central aperture 26, and the provision of a steeply inclined, tapered lead-in portion 27 therefor particularly suits the closure 10 to use with automated cannula insertion. The outer surface 28 of skirt portion 12 is knurled, providing a gripping surface, to facilitate handling of the closure 10. It will be noted that the needle acceptance zone 26, as defined by the outer layer 18 and the elastomer-filled bore 23 of inset portion 16, is of sealing grade thermoplastic elastomer, of limited hardness durometer value. The preferred thermoplastic elastomer is MONSANTO TPE 3281-60, having a Shore A 55-60 durometer value.

The skirt 12 and inset portion 16 may be of low cost thermoplastic elastomer such as an olefinic plastic. Polypropylene and polyethylene constitute suitable TPE's for the first shot step of the process, in injection molding the skirt and plug inset portions.

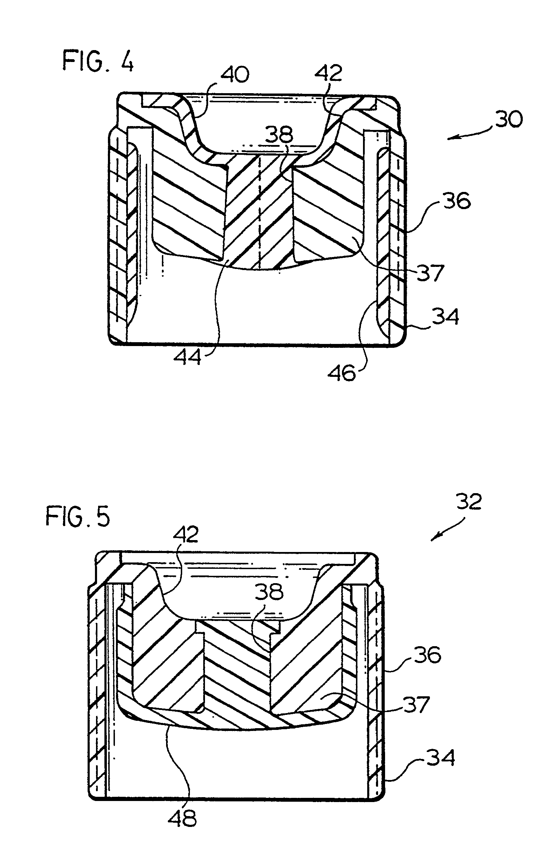

Referring to Figures 4 and 5, the closures 30, 32 each have a cylindrical skirt portion 34, with a knurled portion 36. Each closure 30, 32 has an interior plug portion 37 integral with the skirt portion 34. The plug portion 37 has a central bore 38 therethrough which may be tapered in the fashion of the Figure 1 embodiment, to facilitate the entry of a cannula therethrough.

In the Figure 4 embodiment a sealing layer 40 of sealing grade TPE covers an end depression 42, forming a droplet storage reservoir, and extends through the bore 38, as a cannula seal passage 44. A second layer 46 of sealing grade TPE is bonded to the interior surface of skirt portion 34, for sealing an outer annular surface of a tube 11 (shown in Figure 1).

Referring to the Figure 5 embodiment, the layer 48 of sealing grade TPE extends only to the bottom of depression 42. The layer 48 covers the plug portion 37, to form an interior plug seal with the inner surface of a tube, such as in Figure 1.

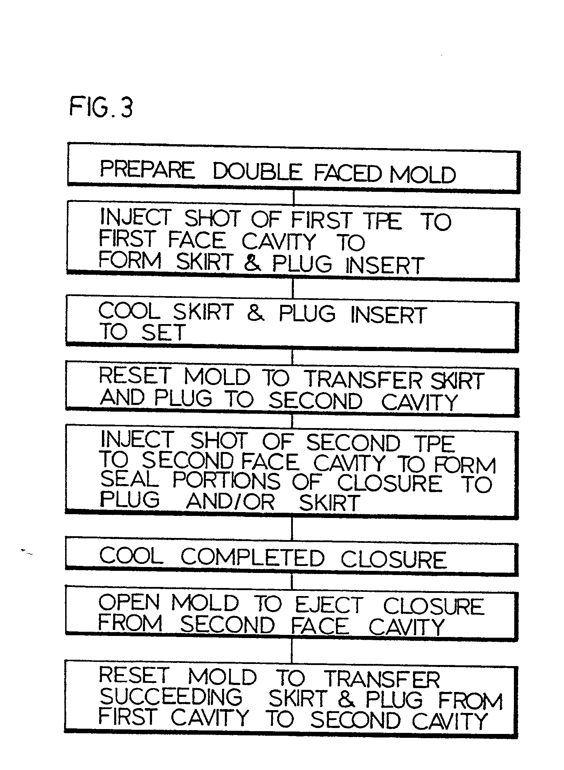

In the preferred process, as illustrated schematically in Figure 3, using a conventional, reversible adjustable injection mold, the first injected TPE, for the skirt and inset closure portions are of low cost polyolefin; in the second shot of the process a sealing grade TPE preferably of the type disclosed above is injected, to fusion bond with the set-up polyolefin.

The process thus comprises the steps of providing an adjustable double-faced reversible mold for two-shot injection molding of a two component closure, the mold having a first cavity portion on one face to receive a first TPE injection therein, and an adjoining second cavity portion on the reverse, second face of the mold to receive a simultaneous second TPE injection therein; injecting the first TPE portion of the object to be molded; cooling the thus formed skirt and plug inset portions; re-setting the mold by reversal thereof, in effect to increase the mold cavity adjoining the skirt and lug insert portions; injecting the second TPE portion in fusing relation at an interface with the first injected portion; cooling the mold, and ejecting the molded article.

By thus using a double-faced reversible central mold portion in concert with two outboard mold halves, it is possible to simultaneously inject a first shot mold injection to the first mold cavity and a second shot injection to the second mold cavity, to complete the molding of the subject closure, in one face of the mold, while carrying out the first stage TPE injection in the other face of the mold. Then, opening the mold to eject the completed closure; reversing the mold centre portion to index the first stage molded part with the other face, and closing the mold for the second shot, the subject closure can be completed without unloading or reloading the first shot, incomplete part.

## Claims

1. A reinsertable sealing closure for the open mouth of a cylindrical tube, said closure having a body portion comprising a radially outer annular skirt portion, in use to receive said mouth and an adjoining neck portion of said tube in inserted relation therein, and,

   a radially inner inset portion connecting in supported relation with said annular skirt;

   said body portion having at least one layer of sealing grade thermoplastic elastomer in covering sealed relation with a central portion of said inset portion; and,

   a peripheral seal portion of said closure of sealing grade TPE, secured to said body portion in supported relation thereby, to provide an annulus of sealing contact with said tube.

2. The closure as set forth in claim 1, said inset portion having an axially outer end face thereof substantially covered by said sealing grade TPE, and an axially inner end face thereof covered by said sealing grade TPE, to provide a sealing contact annulus with a radially inner face surface of said tube.

3. The closure as set forth in claim 2, said inset portion having an axially extending aperture therethrough, having said sealing grade TPE closing said aperture, in use to provide an axially extending sealed needle access passage through said closure for the insertion, in use, of a hollow needle into said tube.

4. A reinsertable sealing closure for use with a sample tube of known diameter and wall thickness, said closure having an outer annular skirt portion to receive said tube in entered relation therein, and an inset, radially inner portion secured to the skirt portion in spaced relation therefrom for a portion of the axial extent of the inset, to form an axial passage therebetween;

   a layer of sealing grade elastomer within said passage secured to one side thereof, in use to press against said tube in sealing relation therewith, one said portion supporting said sealing layer in pressing, sealing relation with said tube.

5. The closure as set forth in claim 4, said central aperture having transverse dimensions sufficient for the passage of a hollow needle therethrough, in sealing relation with said thermoplastic elastomer.

6. The closure as set forth in claim 5, wherein said first thermoplastic elastomer extends in substantially covering, concealing relation with said inset portion.

7. The closure as set forth in claim 6, wherein a radially inner upper crown portion thereof is recessed to provide a droplet reservoir of limited capacity.

8. The closure as set forth in claim 7, said first thermoplastic elastomer covering said reservoir and extending downwardly through said central aperture in covering, thermally bonded relation with said inset portion.

9. The method of manufacturing a removable sealing closure comprising the steps of;

   injection molding within a mold a support portion of said closure, in a selected thermoplastic possessing a selected first range of hardness;

   cooling said support portion to an extent sufficient to set said support portion;

   changing said mold to provide at least one mold space therein adjacent at least one selected surface area of said support portion;

   injection molding within said mold in a sealing grade thermoplastic elastomer a second, covering portion of said closures in fused, covering relation with at least one selected area of said support portion;

   and cooling and removing said closure from said mold.

10. The method as set forth in claim 9, including the step of knurling a selected outer surface area of said closure.

11. The method as set forth in claim 9, said step including opening said mold, and recapping an outer peripheral surface area of said support portion.

FIG.1

FIG.2

FIG.3

| PREPARE DOUBLE FACED MOLD |
|---|

| INJECT SHOT OF FIRST TPE TO FIRST FACE CAVITY TO FORM SKIRT & PLUG INSERT |
|---|

| COOL SKIRT & PLUG INSERT TO SET |
|---|

| RESET MOLD TO TRANSFER SKIRT AND PLUG TO SECOND CAVITY |
|---|

| INJECT SHOT OF SECOND TPE TO SECOND FACE CAVITY TO FORM SEAL PORTIONS OF CLOSURE TO PLUG AND/OR SKIRT |
|---|

| COOL COMPLETED CLOSURE |
|---|

| OPEN MOLD TO EJECT CLOSURE FROM SECOND FACE CAVITY |
|---|

| RESET MOLD TO TRANSFER SUCCEEDING SKIRT & PLUG FROM FIRST CAVITY TO SECOND CAVITY |
|---|

FIG. 4

FIG. 5